# EUROPEAN PATENT APPLICATION

(11) **EP 1 935 966 A1**
(43) Date of publication of application: **25.06.2008**
(21) Application number: 07254973.6
(22) Date of filing: 20.12.2007
(51) Int. Cl.: C10G 11/18

(54) **System and method of reducing carbon dioxide emissions in a fluid catalytic cracking unit**

(30) Priority: 21.12.2006 US 643497
(71) Applicant: UOP LLC, Des Plaines, IL 60017-5017 (US); BP Corporation North America Inc., Warrenville, IL 60555 (US)
(72) Inventor: Towler, Gavin P, Des Plaines, Illinois 60017-5017 (US); Rundell, Douglas N., Warrenville, Illinois 60555 (US)
(74) Representative: Chung, Hsu Min

(57) **Abstract**

Systems and methods of reducing carbon dioxide emissions in a fluid catalytic cracking unit having a reactor and a regenerator at gasification conditions are disclosed. In one example, a method comprises compressing a first gas at an inlet pressure to a predetermined high pressure to define a compressed gas and combusting a second gas with the compressed gas to a predetermined temperature to define a heated gas. The method further comprises expanding the heated gas to a predetermined low pressure to define a feed gas. The method further comprises introducing the feed gas to the regenerator. The feed gas, now at an elevated temperature, provides heat to the regenerator to burn coke off spent catalyst from the reactor, achieving a proportion of carbon monoxide in a flue gas. In turn, this reduces the concentration of carbon dioxide in the flue gas.

## Description

This application is the result of a joint research agreement between UOP, LLC and BP America, Inc.

### BACKGROUND OF THE INVENTION

The present invention relates to systems and methods of reducing carbon dioxide emissions in a fluid catalytic cracking unit.

The fluidized catalytic cracking of hydrocarbons is the mainstay process for the production of gasoline and light hydrocarbon products from heavy hydrocarbon charge stocks such as vacuum gas oils or residual feeds. Large hydrocarbon molecules associated with the heavy hydrocarbon feed are cracked to break the large hydrocarbon chains thereby producing lighter hydrocarbons. These lighter hydrocarbons are recovered as product and can be used directly or further processed to raise the octane barrel yield relative to the heavy hydrocarbon feed.

The basic equipment or apparatus for the fluidized catalytic cracking of hydrocarbons has been in existence since the early 1940's. The basic components of the FCC process include a reactor, a regenerator, and a catalyst stripper. The reactor includes a contact zone where the hydrocarbon feed is contacted with a particulate catalyst and a separation zone where product vapors from the cracking reaction are separated from the catalyst. Further product separation takes place in a catalyst stripper that receives catalyst from the separation zone and removes entrained hydrocarbons from the catalyst by counter-current contact with steam or another stripping medium.

The FCC process is carried out by contacting the starting material - generally vacuum gas oil, reduced crude, or another source of relatively high boiling hydrocarbons - with a catalyst made up of a finely divided or particulate solid material. The catalyst is transported like a fluid by passing gas or vapor through it at sufficient velocity to produce a desired regime of fluid transport. Contact of the oil with the fluidized material catalyzes the cracking reaction. The cracking reaction deposits coke on the catalyst. Coke is comprised of hydrogen and carbon and can include other materials in trace quantities such as sulfur and metals that enter the process with the starting material. Coke interferes with the catalytic activity of the catalyst by blocking active sites on the catalyst surface where the cracking reactions take place. Catalyst is traditionally transferred from the stripper to a regenerator for purposes of removing the coke by oxidation with an oxygen-containing gas. An inventory of catalyst having a reduced coke content relative to the catalyst in the stripper, hereinafter referred to as regenerated catalyst, is collected for return to the reaction zone. Oxidizing the coke from the catalyst surface releases a large amount of heat, a portion of which escapes the regenerator with gaseous products of coke oxidation generally referred to as flue gas. The balance of the heat leaves the regenerator with the regenerated catalyst. The fluidized catalyst is continuously circulated from the reaction zone to the regeneration zone and then again to the reaction zone. The fluidized catalyst, as well as providing a catalytic function, acts as a vehicle for the transfer of heat from zone to zone. Catalyst exiting the reaction zone is spoken of as being spent, i.e., partially deactivated by the deposition of coke upon the catalyst. Specific details of the various contact zones, regeneration zones, and stripping zones along with arrangements for conveying the catalyst between the various zones are well known to those skilled in the art.

Refining companies are under increased pressure to reduce CO₂ emissions as a result of carbon tax legislation and other drivers such as a desire to demonstrate long-term sustainability. Roughly 15-25% of refinery CO₂ emissions are caused by the burning of catalyst coke in the FCC regenerator. Thus, there is a need to provide a way to reduce the carbon dioxide emissions of a fluid catalytic cracking unit.

### BRIEF SUMMARY OF THE INVENTION

Embodiments of the present invention generally provide systems and methods of reducing carbon dioxide emissions in fluid catalytic cracking units having a reactor and a regenerator at gasification conditions. The systems and methods of the present invention provide solutions to lessen carbon dioxide emissions of a fluid catalytic cracking unit.

In one aspect, the present invention provides a method of reducing carbon dioxide emissions in a fluid catalytic cracking unit having a reactor and a regenerator at gasification conditions. The method comprises compressing a first gas at an inlet pressure to a predetermined high pressure to define a compressed gas and combusting a second gas with the compressed gas to a predetermined temperature to define a heated gas. The method further comprises expanding the heated gas to a predetermined low pressure, defining a feed gas. The method further comprises introducing the feed gas to the regenerator. The feed gas, now at an elevated temperature, provides heat to the regenerator to burn coke off spent catalyst from the reactor, achieving a proportion of carbon monoxide in a flue gas. In turn, this reduces the concentration of carbon dioxide in the flue gas.

In another aspect, the method further comprises producing a flue gas from the regenerator. In one example, the flue gas comprises carbon monoxide, hydrogen, carbon dioxide, steam, carbonyl sulfide, and hydrogen sulfide. The method further comprises removing the hydrogen sulfide and a portion of the carbon dioxide from the flue gas to define the first gas at the inlet pressure.

In yet another aspect, the present invention provides a preheating system of a regenerator for a fluid catalytic cracking unit having reduced carbon dioxide emissions. The system comprises a compressor for compressing a first gas at an inlet pressure to a predetermined high pressure to produce a compressed gas. The system further comprises a combustor, in fluid communication with the compressor and configured to combust a second gas with the compressed gas to a predetermined temperature to produce a heated gas, and an expander, in fluid communication with the combustor and configured to expand the heated gas to a predetermined low pressure, to produce a feed gas. The system further comprises a regenerator for regenerating spent catalyst from the reactor. The regenerator is in fluid communication with the expander and configured to receive the feed gas to burn coke from the spent catalyst to produce a flue gas having a reduced concentration of carbon dioxide.

In still another aspect, the system further comprises a gas separator for removing the hydrogen sulfide and a portion of the carbon dioxide from the flue gas to produce the first gas at the inlet pressure.

Further objects, features, and advantages of the present invention will become apparent from consideration of the following description and the appended claims when taken in connection with the accompanying drawings.

### BRIEF DESCRIPTION OF THE DRAWINGS

Figure 1a is a schematic diagram of a fluid catalytic cracking unit. In the configuration as currently practiced, there are carbon dioxide emissions associated with its operation. In the configuration disclosed in accordance with one embodiment of the present invention, carbon dioxide emissions are reduced;

Figure 1b is a schematic diagram of a reactor and a regenerator of the fluid catalytic cracking unit of Figure 1a;

Figure 1c is a schematic diagram of an embodiment of the current invention, comprised of a preheating system for a regenerator of the fluid catalytic cracking unit of Figure 1a to be operated in a manner to reduce carbon dioxide emissions;

Figure 2 is a flowchart of a method of reducing carbon dioxide in the fluid catalytic cracking unit of Figure 1a;

Figure 3a is a schematic diagram of a fluid catalytic cracking unit with a closed loop process and having reduced carbon dioxide emissions in accordance with another embodiment of the present invention;

Figure 3b is a schematic diagram of a reactor and a regenerator of the fluid catalytic cracking unit of Figure 3a;

Figure 3c is a schematic diagram of a preheating system for a regenerator of the fluid catalytic cracking unit of Figure 3a; and

Figure 4 is a flowchart of a method of reducing carbon dioxide in the fluid catalytic cracking unit of Figure 3a.

### DETAILED DESCRIPTION OF THE INVENTION

Embodiments of the present invention generally provide systems and methods of reducing carbon dioxide emissions in a fluid catalytic cracking (FCC) unit having a reactor and a regenerator at gasification conditions. In one example, this is accomplished by using a gas turbine to preheat a feed gas to a regenerator of the FCC unit. As the feed gas is introduced to the regenerator, the heat of the feed gas may be used to burn coke off spent catalyst from the reactor of the FCC unit. This achieves a greater concentration of carbon monoxide, thereby lessening the concentration of carbon dioxide emissions.

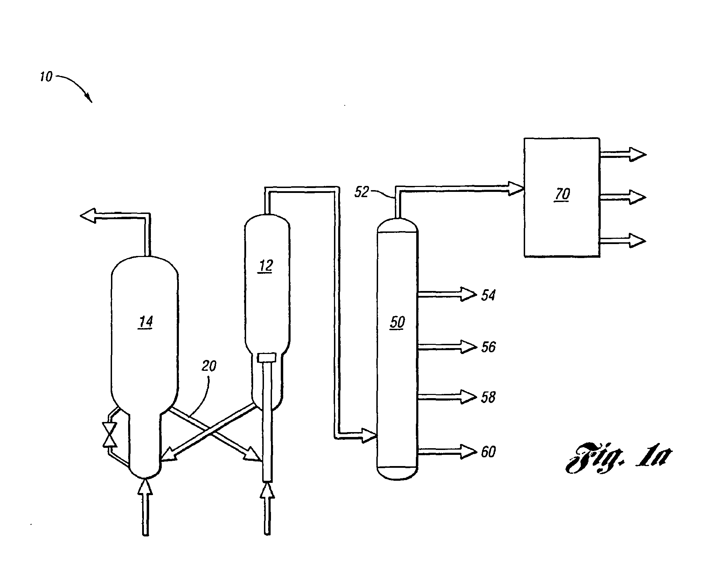

Figure 1a illustrates a fluid catalytic cracking (FCC) unit and separation system 10. As shown, the FCC unit 10 comprises a reactor 12 that is configured to receive a hydrocarbon feedstock (fresh feed) and a regenerator 14 in fluid communication with the reactor 12 to receive spent catalyst. The reactor 12 cracks the feedstock therein to an effluent containing hydrocarbons ranging from methane through relatively high boiling point materials along with hydrogen and hydrogen sulfide. During the cracking reaction, a carbonaceous by-product is deposited on the circulating catalyst. This material, termed "coke," is continuously burned off the spent catalyst in the regenerator 14 as will be mentioned below.

The FCC unit 10 comprises the regenerator 14 for regenerating spent catalyst from the reactor 12. The regenerator 14 is configured to receive a feed gas from an outside source and spent catalyst from the reactor 12. From the reactor 12, the spent catalyst has coke deposited thereon, reducing the activity of the catalyst. The regenerator 14 receives the feed gas to burn the coke off the spent catalyst, thereby producing a flue gas that exits a flue gas line to a flue-gas system. The flue gas may comprise carbon monoxide, hydrogen, carbon dioxide, steam, carbonyl sulfide, and hydrogen sulfide. The regenerator 14 is configured to rejuvenate or reactivate the spent catalyst by the burning the deposited coke off the spent catalyst with the feed gas at predetermined temperatures that is at a relatively high temperature as discussed below.

The regenerator 14 reactivates the catalyst so that, when returned to the reactor 12, the catalyst is in optimum condition to perform its cracking function. The regenerator 14 serves to gasify the coke from the catalyst particles and, at the same time, to impart sensible heat to the circulating catalyst. The energy carried by the hot regenerator catalyst is used to satisfy the thermal requirements for the reactor 12 of the FCC unit 10.

It is to be noted that the FCC unit 10 may have a number of optional units associated with the flue-gas system. In one embodiment, the flue gas may comprise catalyst fines, nitrogen from air used for combustion, products of coke combustions (e.g., oxides of carbon, sulfur, nitrogen, and water vapor), and trace quantities of other compounds. The flue gas exits the regenerator 14 at a high temperature, approximately 600 to 800°C, and at pressures of between about 20 and 50 pounds per square inch gauge (psig). The thermal and kinetic energy of the flue gas can be converted to stream or used to drive a turboexpander-generator system for electrical power generation. Unconverted carbon monoxide (CO) in the flue gas can be combusted to CO₂ in a CO boiler with production of high-pressure steam. Catalyst fines may be removed in an electrostatic precipitator. Carbon dioxide from the regenerator and/or CO boiler is released to the atmosphere.

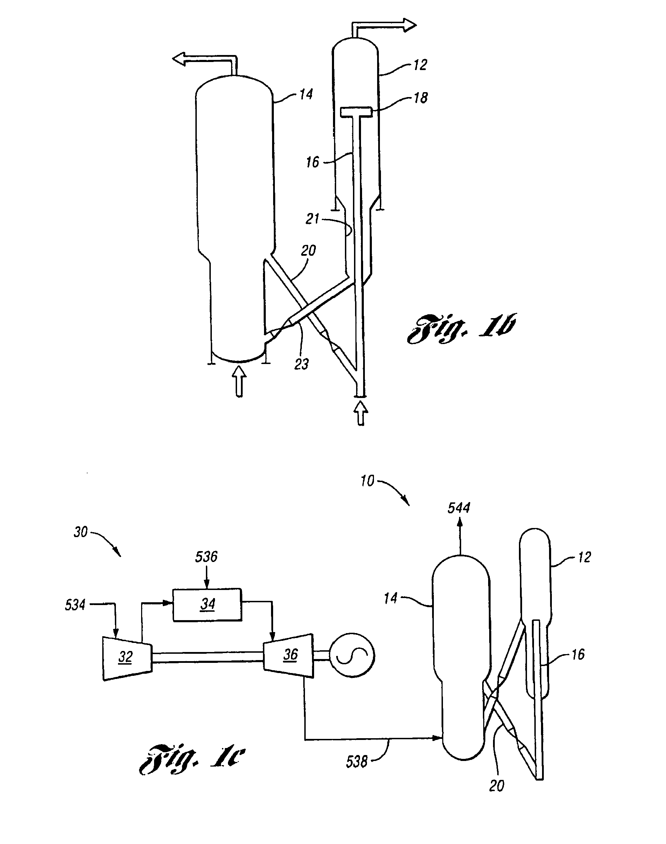

Referring now to Figures 1 a to 1b, from the regenerator 14, hot regenerated catalyst is fed back to the reactor 12 via reactivated catalyst return line 20 and vaporizes the hydrocarbon feedstock to define resultant vapors. The resultant vapors carry the catalyst upward through a riser 16 of the reactor 12 with a minimum of back mixing. At the top of the riser 16, desired cracking reactions have been completed and the catalyst is quickly separated from the hydrocarbon vapors to minimize secondary reactions. The catalyst-hydrocarbon mixture from the riser is discharged into the reactor vessel through a separation device 18, e.g., a riser termination device, achieving a substantial degree of catalyst-gas separation, e.g., at least 90 weight percent product vapor separation from catalyst. A final separation of catalyst and product vapor may be accomplished by cyclone separation.

The reactor effluent is directed to a main fractionator or fractionation column 50 (discussed in greater detail below) of the unit 10 for resolution into gaseous light olefin co-products, FCC gasoline, and cycle stocks. The spent catalyst drops from within the reactor vessel into a stripping section 24 thereof, where a countercurrent flow of steam removes interstitial and some adsorbed hydrocarbon vapors, defining stripped spent catalyst. Stripped spent catalyst descends through a first standpipe 23 and into the regenerator 14.

To maintain the activity of the working-catalyst inventory at a desired level and to make-up for any catalyst lost from the system with the flue gas, fresh catalyst may be introduced into the circulating-catalyst system by any suitable manner. For example this may be accomplished by way of a catalyst storage hopper (not shown). Moreover, an additional storage hopper (not shown) may be used to hold spent catalyst withdrawn from the circulating system as necessary to maintain the desired working activity and to hold all catalyst inventory when the FCC unit 10 is shut down for maintenance and repairs.

As shown in Figures 1 a to 1b, in the operation of the FCC unit 10, fresh feedstock and (depending on product-distribution objectives) recycled cycle oils are introduced into the bottom of the riser 16 together with a controlled amount of regenerated catalyst. The charge may be preheated, either by heat exchange or, for some applications, by means of a fired heater.

Feedstocks for the FCC process include mixtures of hydrocarbons of various types, including relatively small molecules such as found in gasoline to large molecules of 60 or more carbon atoms. The feedstock may include a relatively small content of contaminant materials such as organic sulfur, nitrogen compounds, and organometallic compounds. It is to be noted that the relative proportions of all such materials will vary with the geographic origin of the crude and the particular boiling range of the FCC feedstock. However, the feedstocks may be ranked in terms of their "crackabilities," or the ease with which they can be converted in an FCC unit. Crackability may be defined by a function of the relative proportions of paraffinic, naphthenic, and aromatic species in the feed.

As shown in Figure 1c, one embodiment of the present invention implements a preheating system or a gas turbine cycle 30 to preheat a mixture 534, e.g., steam and oxygen, that is fed as feed stream 538 to an FCC regenerator 14 operating in gasifier mode in which coke on the FCC catalyst is reacted with steam to produce a mixture of carbon monoxide (CO) and hydrogen (H₂) commonly identified as "syngas." The gas turbine 30 may be fired with fuel stream 536 using natural gas as fuel or using an available refinery fuel gas such as the dry gas that is produced in the FCC unit 10 and recovered in a gas condensing section of an FCC unit 10. In an alternative embodiment, the gas turbine engine can be fired using the low-Btu gas that is generated in the gasification process.

Figure 1c depicts the preheating system 30 for the regenerator 14 of the fluid catalytic cracking unit of Figure 1a having reduced carbon dioxide emissions in accordance with one embodiment of the present invention. As shown, the system 30 comprises a compressor 32 for compressing a first gas or gas mixture 534 at an inlet pressure to a predetermined high pressure defining a compressed gas. In one embodiment, the first gas 534 comprises oxygen and carbon dioxide, and in another embodiment the first gas 534 comprises oxygen and steam. The predetermined high pressure and the inlet pressure are at a ratio of preferably between about 5:1 to 50:1, and more preferably between about 15:1 and 30:1. The predetermined high pressure is between about 10 and 30 atmospheres.

As shown in Figure 1c, the system further comprises a combustor 34 in fluid communication with the compressor 32 and is configured to combust a second gas 536 with the compressed gas to a predetermined temperature, defining a heated gas. Preferably, the second gas comprises one of the following gases: methane, steam, dry gas (a refinery produced fuel gas mixture which may contain hydrogen, methane, ethane, ethylene, propane, propylene, and other light gases), and carbon monoxide-hydrogen mixture. In this embodiment, the predetermined temperature is preferably greater than about 400 degrees Fahrenheit (F) (or about 204 degrees Celsius (C)). More preferably, the predetermined temperature is greater than about 800 degrees F (or about 425 degrees C). Most preferably, the predetermined temperature is about 1,300 degrees F (or about 705 degrees C).

Figure 1c illustrates the system 30 further comprising an expander 36 in fluid communication with the combustor 34 in accordance with one embodiment of the present invention. The expander 36 is configured to expand the heated gas to a predetermined low pressure, defining the feed gas 538. In this embodiment, the predetermined low pressure is between about 20 and 50 psig. Preferably, the feed gas 538 has about a 3:1 mole ratio of steam or carbon dioxide to oxygen.

As mentioned above, the regenerator 14 is configured to receive the feed gas to burn coke from the spent catalyst, producing the flue gas. In this embodiment, the flue gas 544 comprises at least one of carbon monoxide, hydrogen, carbon dioxide, steam, carbonyl sulfide, and hydrogen sulfide.

Referring back to Figure 1a, the FCC unit 10 further includes a main-fractionation column 50 through which the reactor effluent is separated into various products. The main-fractionation comprises an overhead line 52, a first side cut line 54, a second side line 56, a third side cut line 58, and a bottom line 60. As shown, the overhead line 52 includes gasoline and lighter material, the first side cut line 54 includes naphtha, the second side cut line 56 includes light cycle oil, the third side cut line 58 includes heavy cycle oil, and the bottom line 60 includes slurry oil. The lines may include other products without falling beyond the scope or spirit of the present invention.

Reactor-product vapors are directed to the main fractionator 50 at which gasoline and gaseous olefin-rich co-products are taken overhead and routed to a gas-concentration unit 70. At the main-fractionator 50, light-cycle oil is recovered as a side cut with the net yield of this material being stripped for removal of light ends and sent to storage. Net column bottoms are yielded as slurry or clarified oil. Because of the high efficiency of the catalyst-hydrocarbon separation system utilized in the reactor design, catalyst carry-over to the fractionator 50 is minimized and it is not necessary to clarify the net heavy product yielded from the bottom of the fractionator 50 unless the material is to be used in some specific application requiring low solids content such as the production of carbon black. In some instances, heavy material can be recycled to the reactor riser 16.

Maximum usage is made of the heat available at the main column 50. Typically, light-cycle and heavy-cycle oils are utilized in the gas-concentration section 70 for heat-exchange purposes, and steam is generated by circulating main-column bottoms stream.

In this embodiment, the FCC unit 10 further includes the gas-concentration column 70 or an "unsaturated gas plant" in fluid communication with overhead line of the main-fractionation column 50. From the overhead line 52, the gas-concentration column 50 receives unstable gasoline and lighter products that are separated therethrough into fuel gas for alkylation, polymerization, and debutanized gasoline.

The gas-concentration section 70, or unsaturated-gas plant, may be one or an assembly of absorbers and fractionators that separate the main-column overhead into gasoline and other desired light products. Olefinic gases from other processes such as coking may be also sent to the FCC gas-concentration section. The gas-concentration unit may have one or a plurality of columns. For example, the gas-concentration unit may be a "four-column" gas-concentration plant comprising a primary absorber, a secondary absorber, a stripper, and a debutanizer. In this embodiment, gas from the FCC main-column overhead receiver is compressed and directed to the gas-concentration unit.

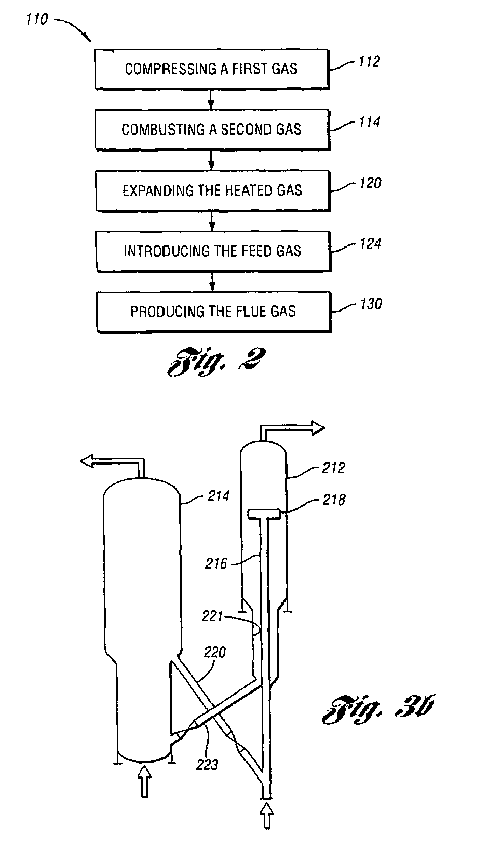

Figure 2 depicts one method 110 of reducing carbon dioxide emissions in the fluid catalytic cracking unit with the reactor and the regenerator at gasification conditions. As shown, the method comprises compressing a first gas at an inlet pressure in box 112 to a predetermined high pressure defining a compressed gas. This may be accomplished with the compressor 32 described in Figure 1c. In this embodiment, the first gas 534 is comprised of a mixture of oxygen and one of carbon dioxide and steam. Trace levels of other gases may also be present. The predetermined high pressure and the inlet pressure are preferably at a ratio of between about 15:1 and 30:1. For example, the predetermined high pressure may be between about 10 and 30 atmospheres.

As shown, the method further comprises combusting a second gas 536 with the compressed gas to a predetermined temperature in box 114, defining a heated gas. This may be accomplished by the combustor as mentioned above. In this embodiment, the second gas comprises one of the following gases: methane, steam, dry gas, and carbon monoxide-hydrogen mixture. Preferably, the predetermined temperature is greater than about 400 degrees Fahrenheit (F). More preferably, the predetermined temperature is greater than about 800 degrees F. Most preferably, the predetermined temperature is about 1,300 degrees F.

In this example, the method further comprises expanding the heated gas to a predetermined low pressure in box 120, defining a feed gas. This may be accomplished by the expander 36 as mentioned above. Preferably, the predetermined low pressure is between about 20 and 30 psig, and the feed gas has about a 3:1 mole ratio of steam or carbon dioxide to oxygen. The method further comprises introducing the feed gas to the regenerator in box 124. The feed gas is heated and thus provides heat to burn coke from spent catalyst to achieve a proportion of carbon monoxide, reducing carbon dioxide emissions. As shown, the method further comprises producing the flue gas from the regenerator in box 130. In this example, the flue gas comprises carbon monoxide, hydrogen, carbon dioxide, steam, carbonyl sulfide, and hydrogen sulfide produced by the reaction of the coke with the oxygen and steam or carbon dioxide contained in feed stream 536. For use within the FCC unit, the catalyst used may be any suitable catalyst including low-activity amorphous catalysts to very-high-activity zeolite-containing catalysts having at least 45% activity.

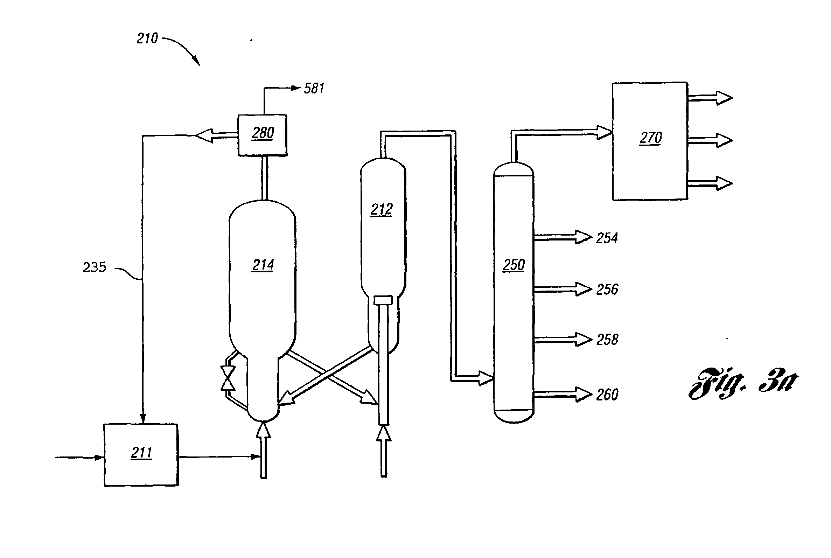

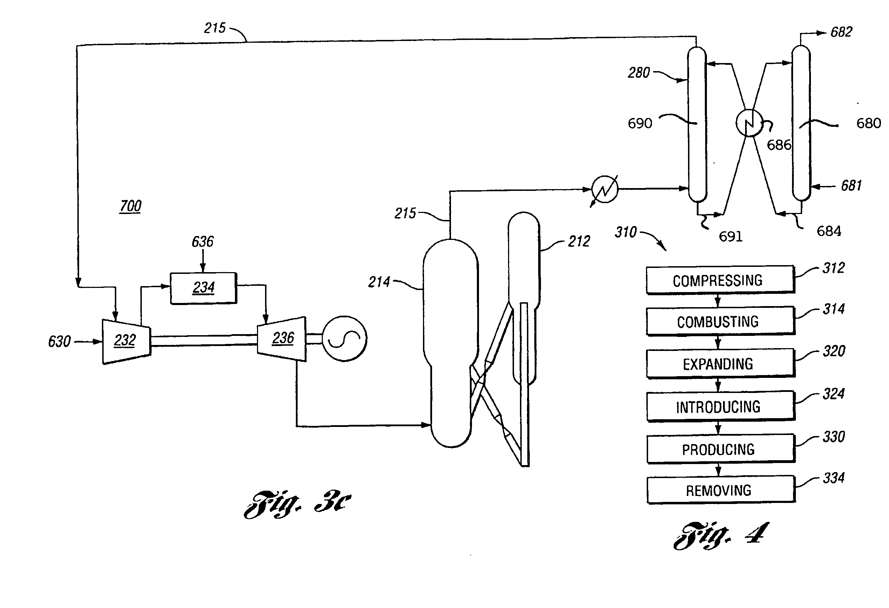

Figures 3a and 3c illustrate other embodiments of an FCC unit designed to produce fewer CO2 emissions. In Figure 3a, the FCC unit and separation units 210 have a gas introduction and mixing system 211 for a regenerator 214 for reduced carbon dioxide emissions in accordance with another embodiment of the present invention. In Figure 3c, the FCC unit and separation units 210 have a gas introduction and mixing system 700 that includes a preheating system for a regenerator 214 for reduced carbon dioxide emissions. As shown, the FCC unit 210 includes similar components as the FCC unit 10 of Figure 1a. For example, the FCC unit 210 of Figures 3a-3c includes a regenerator 214, a reactor 212, a compressor 232, a combustor 234, an expander 236, a main-fractionator column 250, a gas-concentration unit 270 similar to the regenerator 14, the reactor 12, the compressor 32, the combustor 34, the expander 36, the main-fractionator column 50, and the gas-concentration unit 70 of the FCC unit 10 of Figures 1a-1c.

However, in these embodiments, the FCC unit 210 includes a closed loop process. That is, in Figure 3a, the coke on catalyst is gasified partially by effluent gas recycle stream 235. In Figure 3c, the gas turbine engine and preheater 700 is fueled with the syngas stream 215 that is produced in the FCC regenerator 214. As shown in Figures 3a and 3c, a wet gas scrubbing process 280 such as amine absorption, Rectisol^{™}, or Selexol^{™} is used to remove H₂S, COS, and some CO₂ from the gas that leaves the FCC regenerator 214 after heat recovery and cooling. Figure 3c further shows an amine absorption process including a stripper column 680 and an absorber column 690. The stripper column 680 of the amine absorption process includes a stripping stream 681 fed to the stripper 680 and a net removed gas stream 682 exiting the stripper 680. The stripper column 680 further includes a lean solvent stream 684 exiting therefrom and goes through the lean-rich exchanger 686. The lean solvent-stream 684 feeds to the top of the absorber column 690. A rich solvent stream 691 exits the absorber column 690 and passes through the lean-rich exchanger 686 and enters the stripper column 680. The net sum of the removed gases is represented in Figure 3a as stream 581. The syngas stream 215 is then returned to the compression stages 232 of the gas turbine engine or mixing stage 211. This is feasible due to the low BTU value of the recycle gas which can be adjusted as low as needed by increasing the amount of CO₂ in recycle. Optionally, the syngas leaving the regenerator 214 may be compressed prior to the absorber stripper process. This has an advantage of increasing the amount of H₂S and CO₂ absorbed in the solvent and hence reducing the costs of the scrubbing process.

Optionally, in Figure 3c, a second gas stream 636 may be used to provide auxiliary fuel to the combustor 234. Preferably, gas stream 636 comprises one of the following gases: methane, steam, dry gas (a refinery produced fuel gas mixture which may contain hydrogen, methane, ethane, ethylene, propane, propylene, and other light gases), and carbon monoxide-hydrogen mixture.

Optionally, a makeup gas stream 630 may be used to provide auxiliary amounts of oxygen, steam, or carbon dioxide required for the gasification reactions occurring in regenerator 214.

Figure 4 illustrates one method 310 of preheating system of a regenerator for a fluid catalytic cracking unit having reduced carbon dioxide emissions. As in the method of Figure 2, the method of Figure 4 illustrates a method of reducing carbon dioxide emissions in a fluid catalytic cracking unit having a reactor and a regenerator at gasification conditions. As shown, the method comprises compressing a first gas at an inlet pressure in box 312 to a predetermined high pressure to define a compressed gas, and combusting a second gas with the compressed gas in box 314 to a predetermined temperature to define a heated gas. The method further comprises expanding the heated gas to a predetermined low pressure in box 320, defining a feed gas, and introducing the feed gas to the regenerator in box 324. The feed gas, now at an elevated temperature, provides heat to the regenerator to burn coke off spent catalyst from the reactor, achieving a proportion of carbon monoxide in a flue gas. In turn, this reduces the concentration of carbon dioxide in the flue gas.

The method further comprises producing a flue gas from the regenerator in box 330. The flue gas comprises carbon monoxide, hydrogen, carbon dioxide, steam, carbonyl sulfide, and hydrogen sulfide. In this embodiment, the method further comprises removing the hydrogen sulfide and a portion of the carbon dioxide from the flue gas in box 334 to define the first gas at the inlet pressure. This is accomplished with the wet gas scrubbing process 340 shown in Figure 3c. In this example, amine absorption Rectisol^{™}, or Selexol^{™} may be used to remove H₂S, COS, and some CO₂ from the gas that leaves the FCC regenerator 314 after heat recovery and cooling. As shown, the syngas stream is then returned to the compression stages 232 of the gas turbine engine.

The following example of the invention is provided by way of explanation and illustration only. Mathematical simulations were conducted to calculate the reduction of CO₂ production in a regenerator operating under gasification conditions to produce a synthesis gas containing CO and other compounds. The operation of such a system in the conventional case (BASE) is compared to the operation of a system of the present invention as represent by Figure 1C. The following Table 1 (below) illustrates the increased enthalpy contained in the incoming gas stream 538 for the novel invention. This increased enthalpy allows a lessening of combustion of CO to CO₂ in the regenerator/gasifier, thus reducing regenerator CO₂ emissions by 56%.

**TABLE 1**

| | BASE CASE | THIS INVENTION |
|---|---|---|
| Coke Burn, lbs/hr | 108,826 | 108,826 |
| Feed Stream 534 | | |
| CO2, Ib-mols/hr | 16,052 | 9,229 |
| 02, Ib-mols / hr | 5,351 | 10,220 |
| Combustion Stream 536 | | |
| CO lb-mols/hr | - | 6,823 |
| H2, lb-mols / hr | - | 2,916 |
| Inlet to Regenerator / Gasifier Stream 538 | | |
| CO2, lb-mols/hr | 16,052 | 16,052 |
| 02, lb-mols / hr | 5,351 | 5,351 |
| Gas Enthalpy Into Regenerator, Million BTU/hr Enthalpy Reduction, Million BTU/hr | 41.0 | 153.7 112.7 |
| CO2 Production in Regenerator, Ibs/hr | 72,676 | 31,896 |
| Reduction in CO2, Ibs/hr | | 40,781 |
| Reduction in CO2 | | 56% |

While the present invention has been described in terms of preferred embodiments, it will be understood, of course, that the invention is not limited thereto since modifications may be made to those skilled in the art, particularly in light of the foregoing teachings.

## Claims

1. A method of reducing carbon dioxide emissions in a fluid catalytic cracking unit having a reactor and a regenerator, the method comprising:
compressing a first gas at an inlet pressure to a predetermined high pressure to define a compressed gas;
combusting a second gas with the compressed gas to a predetermined temperature to define a heated gas;
expanding the heated gas to a predetermined low pressure to define a feed gas, the predetermined high pressure and the inlet pressure being at a ratio of between about 5:1 and 50:1; and
introducing the feed gas to the generator at gasification conditions, providing heat to burn coke from spent catalyst of the reactor to achieve a proportion of carbon monoxide, reducing carbon dioxide emissions.

2. The method of claim 1 wherein the first gas comprises oxygen.

3. The method of claim 2 wherein the first gas further comprises one of carbon dioxide and steam.

4. The method of any one of claims 1 to 3 wherein the second gas comprises one of the following gases: methane, steam, dry gas, and carbon monoxide-hydrogen mixture.

5. The method of any one of the preceding claims wherein the predetermined high pressure and the inlet pressure are at a ratio of between about 20:1.

6. The method of any one of the preceding claims wherein the predetermined high pressure is between about 15 and 30 atmospheres.

7. The method of any one of the preceding claims wherein the predetermined temperature is between about 205 degrees Celsius (C) and 1005 degrees C.

8. The method of any one of the preceding claims wherein the predetermined temperature is between about 425 degrees C and 805 degrees C.

9. The method of any one of the preceding claims wherein the predetermined temperature is about 705 degrees C.

10. The method of any one of the preceding claim wherein the predetermined low pressure is between about 20 and 30 psig.

11. The method of any one of the preceding claim wherein the feed gas has about a 3:1 mole ratio of carbon dioxide to oxygen.

12. The method of any one of the preceding claim further comprising:
producing a flue gas from the regenerator, the flue gas comprising carbon monoxide, hydrogen, carbon dioxide, steam, carbonyl sulfide, and hydrogen sulfide; and
removing the hydrogen sulfide and a portion of the carbon dioxide from the flue gas to define the first gas at the inlet pressure.

13. A method of reducing carbon dioxide emissions in a fluid catalytic cracking system having a reactor and a regenerator, the method comprising:
compressing a first gas at an inlet pressure to a predetermined high pressure defining a compressed gas;
combusting a second gas with the compressed gas to a predetermined temperature to define a heated gas;
expanding the heated gas to a predetermined low pressure to define a feed gas;
introducing the feed gas to the regenerator at gasification conditions to provide heat to burn coke from spent catalyst stripped from the reactor to achieve a proportion of carbon monoxide;
producing a flue gas from the regenerator, the flue gas comprising carbon monoxide, hydrogen, carbon dioxide, steam, carbonyl sulfide, and hydrogen sulfide; and
removing the hydrogen sulfide and a portion of the carbon dioxide from the flue gas to define the first gas at the inlet pressure.

14. A preheating system of a regenerator for a fluid catalytic cracking unit having reduced carbon dioxide emissions, the system comprising:
a compressor for compressing a first gas at an inlet pressure to a predetermined high pressure defining a compressed gas;
a combustor in fluid communication with the compressor and configured to combust a second gas with the compressed gas to a predetermined temperature to define a heated gas;
an expander in fluid communication with the combustor and configured to expand the heated gas to a predetermined low pressure to define a feed gas, the predetermined high pressure and the inlet pressure being at a ratio of between about 15:1 and 30:1; and
a regenerator at gasification conditions for regenerating spent catalyst from the reactor and configured to receive the feed gas to burn coke from the spent catalyst producing a flue gas.

15. The system of claim 14 wherein the flue gas comprises carbon monoxide, hydrogen, carbon dioxide, steam, carbonyl sulfide, and hydrogen sulfide.

16. The system of claim 14 or claim 15 further comprising:
a gas separator for removing the hydrogen sulfide and a portion of the carbon dioxide from the flue gas to define the first gas at the inlet pressure.

17. The system of any of claims 14 to 16 wherein the first gas comprises oxygen.

18. The system of claim 17 wherein the first gas further comprises carbon dioxide.

19. The system of any one of claims 14 to 18 wherein the second gas comprises one of the following gases: methane, steam, dry gas, and carbon monoxide-hydrogen mixture.

20. The system of any one of claims 14 to 19 wherein the predetermined high pressure is between about 15 and 30 atmospheres.

21. The system of any one of claims 14 to 20 wherein the predetermined temperature is between 205 degrees Celsius (C) and 1005 degrees C.

22. The system of any one of claims 14 to 21 wherein the predetermined temperature is between about 425 degrees C and 805 degrees C.

23. The system of any one of claims 14 to 22 wherein the predetermined temperature is about 705 degrees C.

24. The system of any one of claims 14 to 23 wherein the predetermined low pressure is between about 20 and 30 psig.

25. The system of any one of claims 14 to 24 wherein the feed gas has about a 3:1 mole ratio of carbon dioxide to oxygen.

26. The system of any one of claims 14 to 25 wherein the feed gas has about a 3:1 mole ratio of steam to oxygen.
